# NOUVEAU FASCICULE DE BREVET EUROPEEN

(11) **EP 1 025 424 B2**
(45) Date de publication et mention de la décision concernant l'opposition: **26.03.2008**
(45) Mention de la délivrance du brevet: 18.09.2002
(21) Numéro de dépôt: 98949076.8
(22) Date de dépôt: 19.10.1998
(51) Int. Cl.: G01G 19/18, G01G 3/14

(54) **DISPOSITIF DE REMPLISSAGE PONDERAL**
VORRICHTUNG ZUR GEWICHTSFÜLLUNG
WEIGHT FILLING DEVICE

(30) Priorité: 24.10.1997 FR 9713353
(43) Date de publication de la demande: 09.08.2000
(73) Titulaire: S.E.R.A.C. GROUP, 72400 La Ferte-Bernard (FR)
(72) Inventeur: GRAFFIN, André, Serac Group, F-72400 La Ferte Bernard (FR)
(74) Mandataire: Fruchard, Guy
(86) Numéro de dépôt international: PCT/FR1998/002235
(87) Numéro de publication internationale: WO 1999/022209

(56) Documents cités:
- EP-A- 0 087 310
- EP-A- 0 314 889
- EP-A- 0 517 172
- EP-A- 0 564 303
- EP-A- 0 595 238
- EP-A- 0 659 683
- DE-A- 4 325 836
- FR-A- 815 490
- FR-A- 2 560 587
- IT-A- 1 136 276
- US-A- 2 781 995
- US-A- 4 721 138
- MEIER R: "FORTSCHRITTE IN DER BEHAELTERVERWIEGUNG" CHEMIETECHNIK, vol. 23, no. 6, 1 juin 1994, page 96/97 XP000458835

## Description

La présente invention concerne un dispositif de remplissage pondéral de récipients ayant un goulot et une collerette s'étendant autour du goulot, tels que des bouteilles.

Les installations connues de remplissage pondéral de récipients a goulot comportent généralement un dispositif de pesage qui comprend un capteur de poids surmonté d'un plateau support de récipients. Le dispositif de pesage est disposé pour que le plateau supporte le fond du récipient de manière que le goulot de celui-ci soit positionné juste en dessous du bec de remplissage. Lorsque l'installation est destinée au remplissage de séries de récipients ayant des hauteurs différentes, la position du plateau du dispositif de pesage doit être réglée à chaque changement de série pour être adaptée à la hauteur des récipients de la nouvelle série. L'installation nécessite alors des moyens de réglage du positionnement du dispositif de pesage rendant l'installation coûteuse ou le réglage des dispositifs de pesage est réalisé manuellement et oblige alors à interrompre la production, ce qui entraîne une baisse de la productivité.

Il est également connu du document EP-A-564 303 de réaliser un dispositif de remplissage pondéral de récipients, le dispositif comportant un bras support monté de façon articulée à un châssis et comportant à son extrémité libre un organe de maintien pour supporter un récipient en porte à faux sous un bec de remplissage. Le bras articulé est rappelé vers le haut par un ressort dont la force de rappel correspond au poids de produit que l'on souhaite introduire dans le récipient.

En l'absence de récipient le bras articulé est rappelé vers le haut et pour introduire un récipient il est donc nécessaire d'abaisser manuellement le bras articulé. Ce dispositif est donc totalement inutilisable dans une installation de remplissage où des récipients doivent être remplis en série. En outre, chaque fois qu'un nouveau récipient est utilisé il est nécessaire de remplacer le ressort par un nouveau ressort adapté au poids total du récipient et de la quantité de produit à introduire dans le récipient.

Par ailleurs il est connu de nombreux documents, en particulier du document IT-A-1 136 276, d'utiliser un capteur de poids comprenant un barreau élastique déformable pour mesurer le poids d'un récipient et du produit qu'il contient. Toutefois, aucun de ces documents ne suggère une disposition particulière du capteur de poids permettant une utilisation du dispositif de pesage dans une installation de remplissage en série de récipients de tailles et de contenances variables.

Selon l'invention, on propose un dispositif de remplissage pondéral de récipients ayant un goulot cylindrique et une collerette s'étendant autour du goulot, le dispositif comprenant un dispositif de pesage comportant un élément de maintien ayant une surface supérieure formant un appui pour la collerette d'un récipient de façon que celui-ci s'étende à l'aplomb d'un bec de remplissage en porte-à-faux par rapport à un organe support s'étendant latéralement à partir du bâti, caractérisé en ce que l'organe support est associé à un capteur de poids comprenant un barreau élastiquement déformable ayant une extrémité rigidement fixée au bâti et une extrémité opposée reliée à l'organe support.

L'élément de maintien permet ainsi de suspendre le récipient par la collerette du goulot en porte-à-faux par rapport à l'organe support associé au capteur de poids. Le dispositif de pesage et donc adapté au maintien et au pesage de récipients de différents formats. Par ailleurs, le dispositif de pesage peut être disposé latéralement par rapport au récipient de sorte que le dispositif de pesage est faiblement exposé à des écoulements du produit de remplissage hors du récipient risquant de se produire lors d'une anomalie de fonctionnement, en particulier lorsque le récipient est percé ou lors d'un défaut de fermeture du bec de remplissage.

Selon un mode de réalisation particulier, l'élément de maintien comprend une pince ayant des mâchoires portant des butées disposées pour qu'en position de butée les mâchoires délimitent une ouverture ayant une dimension transversale supérieure à un diamètre du goulot et inférieure à un diamètre de la collerette, de préférence alors, les mâchoires ont une face supérieure pourvue d'une partie proéminente.

La collerette est de la sorte en appui ponctuel sur la surface supérieure des mâchoires de la pince. Lorsque le dispositif de pesage est monté sur une plate-forme rotative, cette disposition permet d'éviter une variation du point d'application du poids du récipient lors d'un basculement du récipient sous l'action de la force centrifuge de sorte que la mesure du poids reste exacte même lorsque le capteur de poids n'est pas un capteur à moment constant.

D'autres caractéristiques et avantages de l'invention ressortiront à la lecture de la description qui suit de modes de réalisation particuliers non limitatifs de l'invention, en relation avec les dessins annexés, parmi lesquels :
- la figure 1 est une vue en élévation, partiellement en coupe selon la ligne I-I de la figure 2, du dispositif de pesage selon un premier mode de réalisation de l'invention ;
- la figure 2 est une vue de dessus du dispositif de pesage selon le premier mode de réalisation ;
- la figure 3 est une vue analogue à la figure 1, en coupe selon la ligne III-III de la figure 4, du dispositif de pesage selon un deuxième mode de réalisation de l'invention ;
- la figure 4 est une vue analogue à la figure 2 du dispositif de pesage selon le deuxième mode de réalisation.

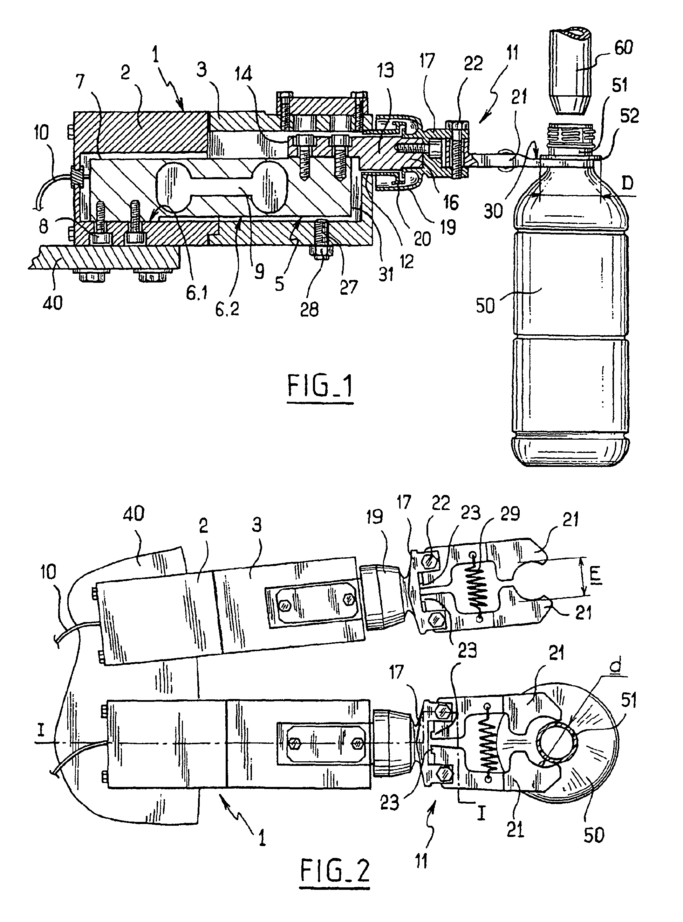

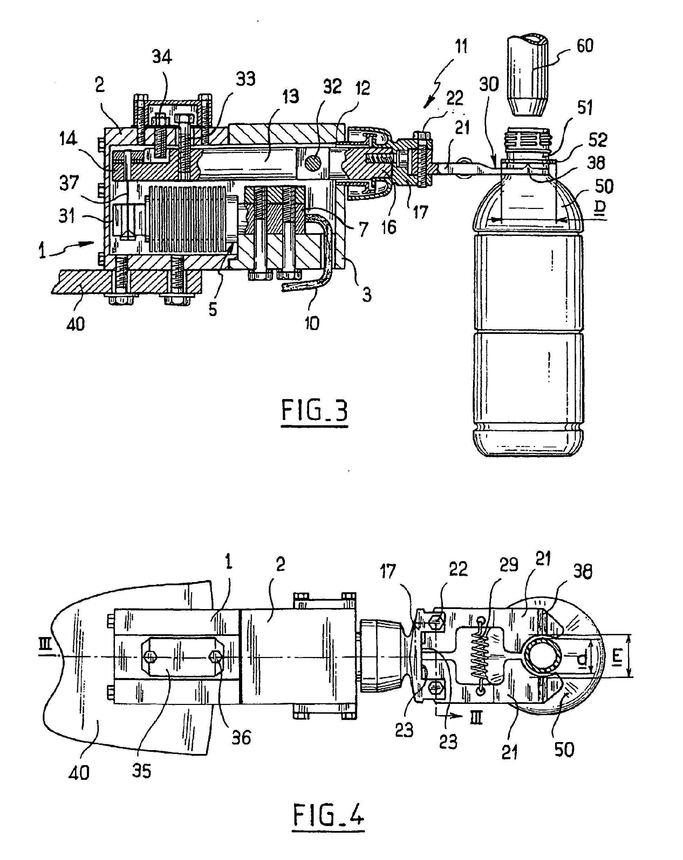

En référence aux figures 1 et 3, l'installation de remplissage pondéral décrite ci-après est destinée au remplissage de récipients 50 ayant un goulot 51 et une collerette 52 s'étendant extérieurement en saillie autour du goulot 51.

L'installation de remplissage est du type à carrousel et comprend une plate-forme rotative 40 du type connu portant un circuit de remplissage classique équipé de becs de remplissage 60 et des dispositifs de pesage, généralement désignés en 1, pour maintenir les récipients 50 à l'aplomb des becs de remplissage 60 et peser les récipients 50 au cours du remplissage de ceux-ci.

En référence aux figures 1 et 2, le dispositif de pesage de récipients selon le premier mode de réalisation comprend un bâti, généralement désigné en 1, formé par un bord de la plate-forme 40 à laquelle est fixé un boîtier comprenant deux parties creuses 2 et 3 reliées l'une à l'autre.

Un barreau 5 en matériau élastiquement déformable est fixé sur le bâti 1 en appui sur une portion 6.1 de la surface inférieure du barreau, adjacente à une extrémité 7 du barreau 5 et s'étendant en saillie du reste 6.2 de la surface inférieure.

De façon connue en soi, le barreau 5 comprend une jauge de contrainte non représentée destinée à être reliée à un organe de commande du remplissage par un conducteur électrique 10, et un évidement transversal allongé 9 pour former un capteur de poids à moment constant.

Un organe support généralement désigné en 11 s'étend latéralement par rapport au bâti 1 au travers d'une ouverture 12 ménagée dans la partie 3 du boîtier. L'organe support 11 comprend un bras 13 dont une extrémité 14 est fixée sur la face supérieure du barreau 5 par des vis et l'extrémité opposée 16 porte une chape 17.

Deux mâchoires 21 sont montées pour pivoter sur la chape 17 par l'intermédiaire de vis 22 formant des axes de pivotement de sorte qu'une pince est ainsi constituée.

Les mâchoires 21 sont reliées l'une à l'autre par un ressort 29 rappelant les mâchoires dans une position rapprochée dans laquelle des butées 23 des mâchoires 21 sont en appui sur la chape 17. Dans cette position, l'ouverture définie par les mâchoires 21 a une dimension transversale E supérieure au diamètre d du goulot 51 du récipient et inférieure au diamètre D de la collerette 52.

Un tube 20 fixé au boîtier et un manchon 19 solidaire de la chape 17 forment un labyrinthe, évitant une pénétration de produit dans le boîtier.

Une vis 27 équipée d'un contre écrou 8 est fixée dans la paroi inférieure de la partie 3 perpendiculairement à la surface inférieure du barreau 5 en regard de la face inférieure de l'extrémité 31 du barreau déformable 5.

En fonctionnement, un récipient est amené par un organe de chargement vers la pince. La surface latérale du goulot 51 vient au contact des extrémités des mâchoires 21 et écarte ces mâchoires l'une de l'autre en s'opposant à l'effort exercé par le ressort 29. Lorsque les mâchoires 21 sont refermées sur le goulot 51, la surface supérieure 30 des mâchoires 21 forme une surface d'appui pour la collerette 52 du récipient. Le récipient 50 est alors suspendu par la collerette 52 à la pince qui constitue un élément de maintien du récipient en porte-à-faux par rapport a l'organe support 11. Le goulot 51 du récipient 50 ainsi suspendu s'étend juste en dessous du bec de remplissage 60.

Le poids du récipient 50 suspendu à la pince s'exerce sur l'extrémité 31 du barreau 5 par l'intermédiaire de l'organe support 11. Cet effort engendre une déformation du barreau 5 détectée par la jauge de contrainte.

On notera que les jeux de montage existant entre l'ouverture 12 et le bras 13, le bras 13 et le tube 20, le tube 20 et le manchon 19 sont suffisants pour permettre la déformation du barreau 5.

Le réglage de la vis 27 permet de modifier l'amplitude maximale de déformation du barreau 5 en constituant une butée pour la partie 6.2 de la surface inférieure du barreau 5.

Les éléments identiques ou analogues à ceux décrits précédemment porteront, dans la description qui suit du deuxième mode de réalisation, la même référence numérique.

En référence aux figures 3 et 4, dans ce deuxième mode de réalisation la partie 3 formant le boîtier du bâti 1 comprend une surface interne inférieure surélevée par rapport à la surface interne inférieure de la partie 2. Le montage du barreau élastique 5 est inversé par rapport au montage précédent c'est-à-dire que l'extrémité 7 du barreau 5 est fixée sur la surface interne inférieure de la partie 3 par des vis.

L'extrémité libre 31 du barreau 5 est reliée par un lien 37 à l'extrémité 14 d'un bras 13 monté pour pivoter dans la partie 3 sur un axe de pivotement 32. La portion d'extrémité 16 du bras 13 porte de manière analogue au premier mode de réalisation une chape 17 et des mâchoires 21 montées pivotantes sur la chape 17.

Les mâchoires 21 ont une face supérieure pourvue d'une partie proéminente 38 formée par une arête s'étendant selon un diamètre de l'ouverture délimitée par les mâchoires 21, perpendiculairement à la direction longitudinale du bras 13.

Une vis à tête 33 s'étend verticalement au travers d'un trou réalisé dans la paroi supérieure de la partie 2 et est fixée dans le bras 13 d'un côté opposé aux mâchoires 21 par rapport à l'axe de pivotement 32. La tête de la vis 33 forme ainsi une butée pour un mouvement du bras 13 dans le sens anti-horaire. Une vis 34 munie d'un contre-écrou est vissée dans la paroi supérieure de la partie 2 sur un même côté de l'axe 32 et a une extrémité s'étendant en regard du bras 13. La vis 34 forme une butée pour le bras 13 dans le sens horaire.

Le fonctionnement du dispositif de pesage selon le deuxième mode de réalisation est sensiblement identique à celui décrit pour le premier mode de réalisation.

Le zéro du dispositif de pesage est réglé en mettant le lien 37 légèrement en tension par un réglage approprié de la vis 33.

Le poids du récipient provoque ici le pivotement du bras 13 dans le sens horaire autour de l'axe de pivotement 32. L'extrémité 14 se déplace alors et entraîne par l'intermédiaire du lien 37 l'extrémité 31 du barreau 5. Ceci provoque une déformation du barreau 5 détectée par la jauge de contrainte.

La vis 34 limite la déformation maximale du barreau 5.

On remarquera que la paroi latérale du goulot 51 n'est pas serrée par les pinces 21. Le maintien du récipient par la pince est ainsi essentiellement assuré par l'appui de la collerette 52 sur les proéminences 38. Du fait de cette disposition, le récipient peut basculer sous l'action de la force centrifuge lorsque la plate-forme 40 est en rotation sans changement du point d'application du poids du récipient sur le bras 13. La force résultant de la force centrifuge peut donc être corrigée de façon connue en soi par les organes de traitements reliés au capteur de poids.

Bien entendu l'invention n'est pas limitée au mode de réalisation décrit et on peut y apporter des variantes de réalisation sans sortir du cadre de l'invention tel que défini par les revendications.

Bien que le capteur de poids ait été représenté sous la forme d'un barreau déformable travaillant en flexion, on pourrait le remplacer par un capteur travaillant en traction ou en compression.

## Revendications

1. Dispositif de remplissage pondéral de récipients (50), ayant un goulot cylindrique (51) et une collerette (52) s'étendant autour du goulot, le dispositif comprenant un dispositif de pesage comportant un élément de maintien (21) ayant une surface supérieure (30) formant un appui pour la collerette d'un récipient de façon que celui-ci s'étende à l'aplomb d'un bec de remplissage (60) en porte-à-faux par rapport à un organe support (11) s'étendant latéralement à partir du bâti, **caractérisé en ce que** l'organe support est associé à un capteur de poids comprenant un barreau (5) élastiquement déformable ayant une extrémité (7) rigidement fixée au bâti (1) et une extrémité opposée reliée à l'organe support(11).

2. Dispositif de remplissage selon la revendication 1, **caractérisé en ce que** l'organe support (11) est monté pour pivoter autour d'un axe (32) par rapport au bâti (1), une partie (14) de l'organe support opposée à l'élément de maintien (21) étant reliée de façon articulée à une extrémité libre (31) du barreau déformable (5).

3. Dispositif de remplissage selon la revendication 1 **caractérisé en ce que** le barreau déformable (5) comporte un évidement transversal allongé (9), et **en ce qu'**une extrémité (14) de l'organe support (11) opposée à l'élément de maintien (21) est rigidement fixée à une extrémité libre (31) du barreau (5).

4. Dispositif de remplissage selon la revendication 1, **caractérisé en ce que** l'élément de maintien comprend une pince ayant des mâchoires (21) comportant des butées (23) disposées pour qu'en position de butée les mâchoires délimitent une ouverture ayant une dimension transversale (E) supérieure à un diamètre (d) du goulot (51) et inférieure à un diamètre (D) de la collerette (52).

5. Dispositif de remplissage selon la revendication 4, **caractérisé en ce que** les mâchoires (21) ont une face supérieure (30) pourvue d'une partie proéminente (38).

## Claims

1. A weight-filler device for weight-filling receptacles (50) having a cylindrical neck (51) and a collar (52) extending around the neck, the device comprising a weighing device including a holding element (21) having a top surface (30) forming a support for the collar of a receptacle so that the receptacle extends vertically in line with a filler spout (60) and is cantilevered out from a support member (11) extending laterally from the structure, **characterized in that** the support member is associated with a weighing sensor comprising an elastically flexible bar (5) having one end (7) rigidly secured to the structure (1) and an opposite end connected to said support member (11).

2. A weight-filler device according to claim 1, wherein the support member (11) is mounted to pivot about an axis (32) relative to the structure(1), a portion (14) of the support member opposite from the holding element (21) being hinged to a free end (31) of the deformable bar (5).

3. A weight-filler device according to claim 1, wherein the deformable bar (5) has an elongate through slot (9), and wherein one end (14) of the support member (11) opposite from the holding element (21) is rigidly fixed to a free end (31) of the bar (5).

4. A weight-filler device according to claim 1, wherein the holding element comprises a clamp having jaws(21) including abutments (23) disposed so that in the abutment position the jaws define an opening of transverse dimension (E)greater than the diameter (d)of the neck (51) and smaller than the diameter (D) of the collar (52).

5. A weight-filler device according to claim 4, wherein the jaws (21) have a top face (30) provided with a projecting portion (38).

## Patentansprüche

1. Vorrichtung zur gewichtsabhängigen Befüllung von Behältern (50), die einen zylindrischen Hals (51) und einen sich um den Hals herum erstreckenden Kragen (52) haben, wobei die Vorrichtung eine Wiegevorrichtung einschließt, die ein Halteelement (21) mit einer Oberfläche (30) enthält, die eine Auflage für den Kragen eines Behälters bildet, derart, dass sich dieser senkrecht unterhalb eines Füllstützens (60) frei auskragend relativ zu einem Trägerorgan (11) erstreckt, das sich seitlich von dem Gestell weg erstreckt, **dadurch gekennzeichnet, dass** das Trägerorgan mit einem Gewichtssensor verbunden ist, der einen elastisch verformbaren Stab (5) einschließt, der ein Ende (7) hat, das starr am Gestell (1) befestigt ist, sowie ein entgegengesetztes Ende, das mit dem Trägerorgan (11) verbunden ist.

2. Vorrichtung zur gewichtsabhängigen Befüllung nach Anspruch 1, **dadurch gekennzeichnet, dass** das Trägerorgan (11) derart gelagert ist, dass es relativ zum Gestell (1) um eine Achse (32) verschwenkt werden kann, wobei ein dem Halteelement (21) entgegengesetzter Abschnitt (14) des Trägerorgans gelenkig mit einem freien Ende (31) des verformbaren Stabes (5) verbunden ist.

3. Vorrichtung zur gewichtsabhängigen Befüllung nach Anspruch 1, **dadurch gekennzeichnet, dass** der verformbare Stab (5) eine querverlaufende, längliche Aussparung (9) hat und dass ein dem Halteelement (21) entgegengesetztes Ende (14) des Trägerorgans (11) starr mit einem freien Ende (31) des Stabes (5) verbunden ist.

4. Vorrichtung zur gewichtsabhängigen Befüllung nach Anspruch 1, **dadurch gekennzeichnet, dass** das Halteelement eine Zange mit Backen (21) einschließt, die Anschläge (23) enthalten, die so angeordnet sind, dass die Backen in Anschlagsstellung eine Öffnung begrenzen, die eine Querabmessung (E) hat, die über einem Durchmesser (d) des Halses (51) und unter einem Durchmesser (D) des Kragens (52) liegt.

5. Vorrichtung zur gewichtsabhängigen Befüllung nach Anspruch 4, **dadurch gekennzeichnet, dass** die Backen (21) eine Oberseite (30) haben, die mit einem vorstehenden Abschnitt (38) versehen ist.
